Europäisches Patentamt

European Patent Office

Office européen des brevets

(11) Publication number: **0 190 502**
**B1**

# EUROPEAN PATENT SPECIFICATION

(45) Date of publication of patent specification: **27.07.88**

(51) Int. Cl.⁴: **E 21 B 7/26, E 21 B 7/28, F 16 L 55/18**

(21) Application number: **85309083.5**

(22) Date of filing: **13.12.85**

(54) Mains bursting tool.

(30) Priority: **10.01.85 GB 8500565**
**27.02.85 GB 8505093**
**08.05.85 GB 8511646**
**10.01.85 EP 85300156**

(43) Date of publication of application:
**13.08.86 Bulletin 86/33**

(45) Publication of the grant of the patent:
**27.07.88 Bulletin 88/30**

(84) Designated Contracting States:
**BE DE FR IT NL SE**

(56) References cited:
**EP-A-0 086 567**
**US-A-3 185 225**

(73) Proprietor: **British Gas Corporation**
**148 Grosvenor Road**
**London SW1V 3JL (GB)**

(72) Inventor: **Wayman, Malcolm**
**24 Linden Way Darras Hall Ponteland**
**Newcastle Upon Tynne NE20 9DP (GB)**
Inventor: **Mood, Geoffrey Ingles**
**6 Briar Avenue**
**Whitley Bay Tyne & Wear, NE26 1RU (GB)**

(74) Representative: **Cummings, Robert James**
**British Gas Corporation Patents Department 326**
**High Holborn**
**London WC1V 7PT (GB)**

Courier Press, Leamington Spa, England.

## Description

The invention relates to main burstimg tools particularly, though not exclusively, such tools for bursting gas, water or sewer mains.

One form of main bursting tool described in GB-A-2092701 has been used which consists of a body which is drawn through the main by a cable and which includes a percussive mechanism operable to subject the main to repeated impacts. The tool has a relatively narrow blade which is pivotally connected at its leading end to the tool body and which is angularly displaceable outwardly and inwardly by a hydraulic cylinder. The blade is intended to cut through main joints by outward displacement. Such a tool has been found to be ineffective in bursting mains of some constructions and in certain types of ground. The reason for this is believed to be the fact that the tapered forward end surface of the tool is effectively of unitary construction and does not include a part which is movable (independently of the forward movement of the tool) to push the surrounding ground away from the forward end of the tool. The tool thus has no capability (independently of the advancing movement of the tool) of compressing ground laterally to form a clearance into which the tool can advance. The relatively narrow pivotal blade is not used to compress ground and could not be expected to be effective for that purpose. A similar form of tool has been proposed in GB-A-213998 in which a pneumatic hammer strikes pivotal blades.

Another form of tool has been proposed in GB-A-2122299 for use in correcting mis-alignment or reduced cross-section of sewer pipes so that the original internal diameter is restored. Side-loads acting on the displaceable elements and on the wedge which displaces the elements are transferred to the piston rod of the hydraulic cylinder which moves the wedge. Accordingly, the cylinder assembly is subjected to bending loads which could be prejudicial to the life or proper working of the tool.

It is the object of the invention to provide a main bursting tool by which the drawbacks of the previously used or proposed tools are reduced or eliminated.

According to the invention, a mains bursting tool comprising an elongated body, first means for attaching the body to a towing device and second means engageable with a liner the body comprising a forwardly tapering outer wall and containing powered mechanism including a tapered member movable longitudinally of the body is characterised in that the tapered outer wall is divided longitudinally into two parts, the first part having guide parts by which that part is guided for rectilinear movement transversely of the body by engagement with co-operating parts on the body, said part being movable rectilinearly transversely of the body by the powered mechanism which is a hydraulic cylinder acting on a wedge having a bearing surface in permanent sliding engagement with a bearing surface on the movable first part and having a bearing surface in permanent sliding engagement with a bearing surface on the body, the guiding parts being arranged to prevent side-loads and bending loads acting on the movable first part from being imposed on the cylinder.

Preferably, each of said first and second parts is of 180° circumferential extent.

An embodiment of the invention will now be described by way of example with reference to the accompanying drawings, in which:-

Figure 1A together with Figure 1B is a longitudinal vertical section through the main bursting tool;

Figure 2 is a vertical section on the line II-II in Figure 1;

Figure 3 is a plan of part of the body of the tool shown in Figures 1 and 2 and,

Figure 4 is a vertical section on the line IV-IV in Figure 3.

The tool shown in the drawings consists of the following principal components: a body 10 made up of three sections namely, a leading cylindrical section 12, an intermediate section 14 having a wall of frusto-conical shape and made up of a first part 16 and a second part 18; a cylindrical trailing section 20; a wedge 22 arranged between the parts 16 and 18; and a hydraulic cylinder 24 housed in the trailing section 20 and having a piston rod 26 connected to the wedge 22.

The tool is towed through the main to be burst by a towing device such as a self-advancing mechanism which can "walk" inside the main or by a towing device in the form of a cable connected to a winch. The cable or other device is attached to a clevis 28 secured to the leading end of the leading section 12. The tool forms an enlarged cavity in the ground and draws into the cavity a polyethylene or similar tubular liner 30 which extends over the trailing section 20 and which is secured to it by a clamp 32. Alternatively, the liner may be made up of tubular lengths of polyvinyl-chloride interconnected, for example, by inter-engaged socket-end formations and a cable passed through the lengths, or by some other means. The liner assembly is secured to the tool by the cable or some other means.

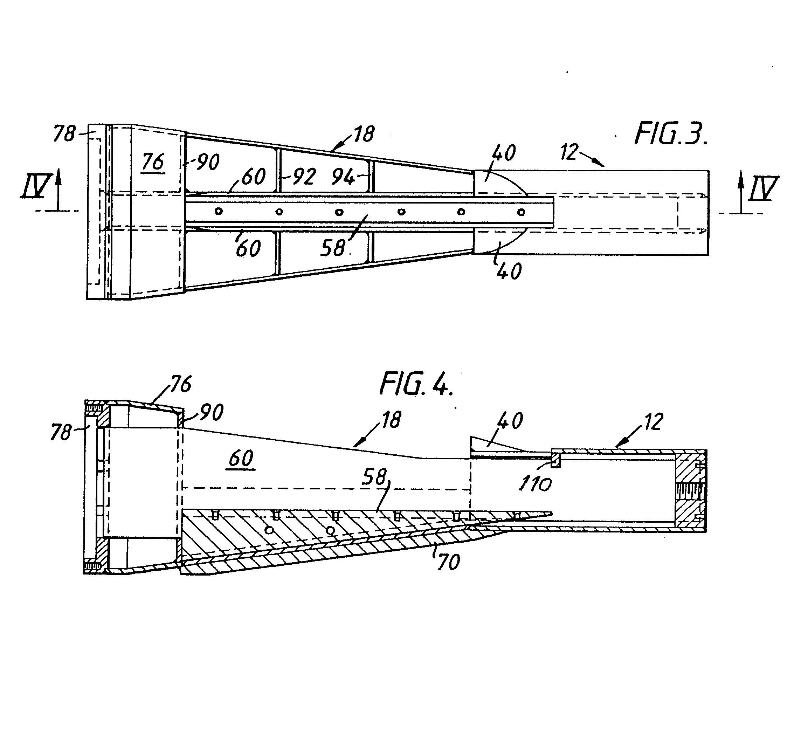

The leading section 12 and the intermediate section 14 are of welded steel, fabricated construction. Alternatively, they may be of cast construction. The leading section 12 is a hollow cylinder which accommodates the leading end of the wedge 22 when it is advanced beyond the smaller diameter end of the intermediate section 14. The leading section 12 has an opening in its wall at its trailing end which receive the leading end of the first part 16 of the intermediate section 14 (Figure 4). At each side of the opening the trailing portion of the leading section 12 carries a -shroud 40. The two shrouds 40 shroud the leading edge 42 of a wall 44 of the first part 14.

The wall 44 is of part-frusto-conical shape and forms 180° of the circumference of the intermediate section 14 between the smaller-diameter end of the section 14 and the trailing end 46 of the wall 44. The wall 44 is carried by an inner elongate support 48 having an inner bearing pad 50 slidably engaging a bearing pad 52 on the upper side of the wedge 22. The member 48 movably accommodated between the shrouds 40.

The lower side of the wedge 22 has a bearing pad 54 slidably engaging a bearing pad 56 carried by a counter-support 58. The support 58 is secured to the second part 18 of the intermediate section 14.

The support 58 is positioned between two side-plates 60 which extend right through the intermediate section 14 and the leading section 12 and which accommodate the wedge 22 between them.

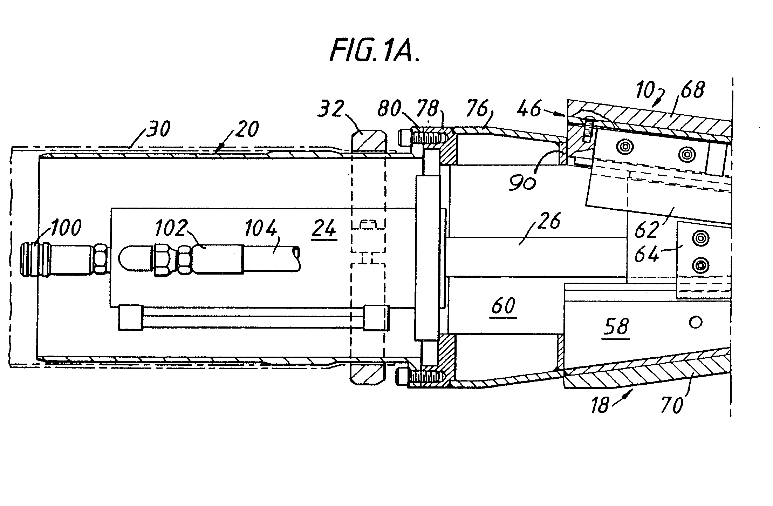

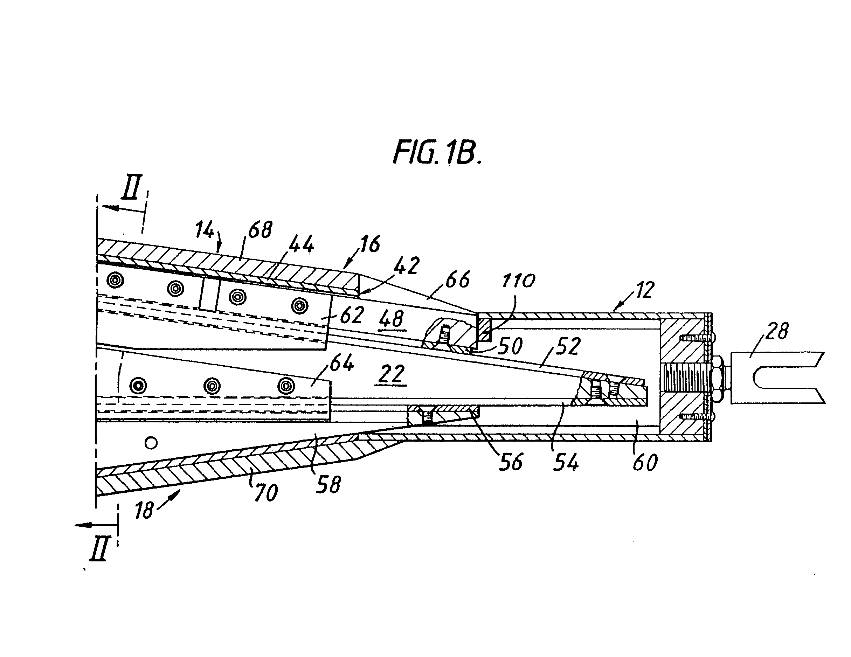

The outer margins of the support pads 50, 52 are trapped in sliding engagement in opposed grooves in a pair of plates 62 secured to respective opposite sides of the member 48. The pads 54, 56 are similarly trapped in opposed grooves in a pair of plates 64 secured to respective opposite sides of the wedge 22. In that way, the first part 16 is obliged to retract inwardly when the wedge 22 is retracted leftwards, as seen in Figure 1.

The member 48 carries a short outer rib 66 as a continuation of a rib 68 formed on the outside of the wall 44. The leading end of the rib 66 does not protrude beyond the outer surface of the leading section 12 even in the outer position of the part 16 shown in Figure 1. The part 18 has an outer rib 70 diametrally opposite the rib 68. Such ribs are optional.

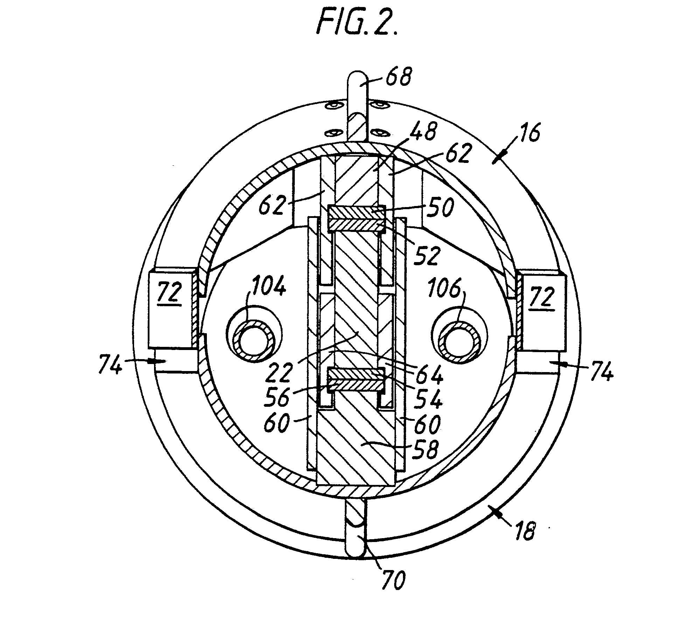

The first part 16 has at each side margin an extension strip 72 welded to its outer surface (Figure 2). The inner surfaces of the strips 72 slide on plane marginal surfaces 74 of the lower, second part 18. The intermediate section 14 includes an annular, generally frusto-conical wall portion 76. The second part 18 of the section is secured to, and extends forwardly from, the leading edge of the wall portion 76. The trailing edge of the portion 76 is secured to a circular plate 78, which has an approximately cruciform opening. The trailing section 20 is a steel cylinder and has a leading, external flange 80 secured by bolts to the plate 78. The hydraulic cylinder 24 has a forward flange secured to the plate 78. The trailing ends of the side-plates 60 are received in the opening in the plate 78 and are secured to the plate.

The side-plates 60 are braced by transverse plates 90, 92 and 94, which are secured to the side-plates and to the portion 76 or the second part 18, At their leading ends, the side-plates 60 are secured to the inside surface of the leading section 12, which contains a transverse rib 110.

The cylinder 24 has connections such as 100 by which fluid can be conveyed from and to a power pack (not shown) via conduits extending through the liner 30. When the tool is towed by a self-propelled device, further connections such as 102 enable fluid to be conveyed to the cylinders of the towing device via conduits 104, 106 passing through the body 10 and out through apertures (not shown) through the leading end of the leading section 12.

When the tool is towed (as is preferred) by a tow cable only hydraulic connections to the cylinder are required. In that case the leading section is preferably modified from that shown to provide a tapered lug to which a D-shaped shackle is connected by a pin.

OPERATION

Assuming the tool is to be towed by a cable and winch, the cable is fed through a section of existing buried main, the ends of which have been exposed by excavation. In the case of gas distribution systems, the main will be made of cast iron, ductile iron or asbestos-based material. Other mains, such as those for water or sewage, for example, are made of cast iron, clay or vitreous ceramic material. The tool is applicable to bursting all such types of main. The winch is preferably a hydraulically-driven winch accommodated in the excavation at the end of the main so that the cable passes in a straight line out of the main to the winch barrel.

One end of the relatively thin liner 30, in the case of a polyethylene liner, is fitted over the trailing section 20 and attached to it by the clamp 32. The cable is attached to the body 10 and the winch is operated to draw the tool into engagement with the end of the main. The first part 16 is retracted at this stage. Next, the cylinder 24 is operated to advance the wedge 22 which forces the first part 16 outwardly. Typically, for example, hydraulic pressures up to 207 bar (3000 lbs. per sq. inch) are used to develop forces up to 36 Tonnes exerted by the first and second parts 16, 18 upon the main and the surrounding ground. The outward movement of the part 16 bursts the main and partly enlarges the cavity in the ground.

Next, the part 16 is retracted and the tool advances as far as possible under the load applied by the mechanism, such as a cable, which advances the tool. In so doing, the parts 16 and 18 and the fructo-conical wall portion 76 further enlarge the partially enlarged part of the cavity just referred to. The fragments of the previously-broken main are thus pushed outwardly into the surrounding soil.

A typical cast iron main has a nominal inside diameter of, for example, 150 millimetres (6 inches) and the diameter of the fully-expanded cavity formed by the tool is 240mm (9.5 inches) to receive a liner 30 of 202 mm (8 inches) outside diameter. The same tool can also be used, when suitably designed, to burst mains having inside diameters of 127 mm (5 inches), 178 mm (7 inches) or 203 mm (8 s inches). The tool made in a different size will burst mains having s) or inside diameters of 102 mm (4 inches) or 127 mm (5 inches) for example.

Where the winch can be set to operate at a constant pressure, the winch can be effectively self-controlling so that relatively little, if any, action is required by the operator to control the winch. The tool advances while resistance is low ie after the first part 16 has been retracted following a bursting action. The cable tension keeps the tool in engagement with the unburst main. The actions described above are repeated, the first part 16 successively advancing and retracting and the tool being progressively advanced by the cable tension as the main is burst and expanded.

The winch must be capable of providing sufficient cable tension to overcome the frictional resistance experienced by the tool and the liner, if any, connected to the tool.

The facts that the parts 16 and 18 represent almost the whole of the frusto-conical intermediate section 14 and that the first part 16 advances outwardly bodily relative to the part 18 mean that the whole of each part 16, 18, including both ends of the part, is effective in bursting the main and enlarging the cavity formed. The action of the two parts 16, 18, upon the surrounding broken main and adjacent ground, as they are relatively separated by the wedge is more efficient in bursting the main and expanding the cavity than the action of hinged members of known kind or of a tapered body forced through the cavity.

The first part 16 is shown in Figure 1 in its fully-advanced position, in which the transverse dimension between the trailing edge 46 and the diametrically opposite point of the body 10 is the same as the maximum outer diameter of the portion 76. This fact, with the relatively reduced diameter of the trailing section 20 considerably relieves the liner 30 of frictional forces during operation.

After the liner 30 has been pulled through the burst main the tool is released from the liner 30. A new main typically of plastic material such as polyethylene is pulled through the liner 30, which protects the outer surface of the main from abrasion and scratches.

Alternatively, the liner and the new main arranged within the liner are both attached to the tool and pulled through the enlarged cavity together. As a further alternative, typically in sewer main replacement for example, only a new main is attached to the tool and pulled through the cavity, no separate liner being used. The new main itself then constitutes the sole liner and in this specification the term "liner" means either a main itself or a liner through which the new main passes or will pass.

The body 10 is of strong construction and includes the counter-support 58 on which the bearing pad 56 is mounted. The cylinder 24 is mounted at one end, cantilever-wise upon the plate 78. Bending loads and side loads acting on the body are borne by the strong body and reacted within it. For example, side-loads acting on the first and second parts 16, 18 are reacted through the wedge 22. The bearing surface provided by the pad 56 for the wedge 22 accordingly prevents side and bending loads acting on the body from being imposed on the cylinder 24.

In a modification (not shown) there are more than one first part, for example two first parts each of 180° extent with overlap provided at the side edges by extension strips. The wedge slides between the two first parts. The second part 18 is dispensed with in such a construction.

In such a modification, the body has a spine member rigidly secured to the portion 76. The spine member corresponds to the counter-support 58 and is slidingly engaged at its bearing pad by the wedge. Thus, side-loads and bending loads acting on the body are prevented by the spine member from being imposed on the cylinder assembly.

In the retracted position of the first part 16 shown in Figure 1, the wall 44 is a frusto-conical continuation of the wall of the portion 76. A bulkhead is formed by a transverse plate inside the first part 16 adjacent the rear end of the wall 44 and close to the portion 76, so that when the first part is advanced there is no open gap between the wall 44 and the portion 76.

The first and second parts 16, 18, the leading section 12 and the wall portion 76 provide a virtually closed housing complementary to the cylinder 24. The wedge 22 and exposed part of the piston rod 26 are shielded by that housing at all times during operation, whether the first part 16 is advanced or retracted.

In further modifications (not shown):-

(i) the frusto-conical wall 76 is replaced by a cylindrical wall and the diameter across the trailing ends of the parts 16, 18 in their fully closed position is the same as the diameter of the cylindrical wall. For example, 240 mm. Optionally, the length of the wall is increased in comparison with the length shown in the drawings.

(ii) the intermediate section 14, instead of having a circular cross-section throughout in the closed position of the parts 16, 18, changes from circular section at its trailing end to elliptical section at its leading end. The minor axis of the ellipse is in that case vertical in a sectional view corresponding to Figure 2. The diameter of the leading cylindrical section is preferably equal to the major ellipse axis at the leading end of the intermediate section so that the leading section shrouds the leading ends of the blades 68, 70. The shroud 40 is dispensed with.

Either a plane wall part or a fairing closes the gap between the trailing end of the leading section and the elliptical wall of the intermediate section.

This modification increases the effectiveness of the separation movement of the parts 16, 18 in bursting the main and enlarging the cavity. The cross-section of the intermediate section changes from the elliptical shape in the closed relative position of the parts 16, 18 to a substantially circular shape in the separated relative position of the parts when the wedge is advanced.

In the embodiment described above with reference to the drawings, the part 16 is guided as it moves rectilinearly with respect to the part 18 by sliding engagement between the ends of the support 48 and the plate 90 and rib 110; snd also by sliding engagement between the strips 72 and the surfaces 74.

## Claims

1. A mains bursting tool comprising an elongated body (10), first means for attaching the body to a towing device and second means engageable with a liner, the body comprising a forwardly tapering outer wall (16, 18) and containing powered mechanism including a tapered member (22) movable longitudinally of the body, characterized in that the tapered outer wall is divided longitudinally into two parts (16, 18), the first part (16) having guide parts (62; 48) by which that part (16) is guided for rectilinear movement transversely of the body (10) by engagement with co-operating parts (60; 90, 110) on the body, said part (16) being movable rectilinearly transversely of the body by a powered mechanism which is hydraulic cylinder (24) acting on a wedge (22) having a bearing surface (52) in permanent sliding engagement with a bearing surface on the movable first part (16) and having a bearing surface (54) in permanent sliding engagement with a bearing surface (56) on the body (10), the guiding parts (62, 48; 60, 90, 110) being arranged to prevent side-loads and bending loads acting on the movable first part (16) from being imposed on the cylinder (24).

2. A tool according to claim 1 in which each of said parts (16, 18) is of 180° circumferential extent.

3. A tool according to claim 1 or claim 2 in which at adjacent longitudinal margins of said parts (16, 18) one margin (74) is overlapped by a respective longitudinal marginal extension (72) of the adjacent part.

4. A tool according to any preceding claim, in which said parts (16, 18) carry longitudinally-extending and diametrally-opposed longitudinal external ribs (68, 70).

5. A tool according to claim 4, in which the rib on the non-movable part (18) extends forwardly beyond the rib (68) on a movable part.

6. A tool according to claim 4 or claim 5, in which the leading end of the rib (68) on a movable part (16) does not protrude beyond the outer surface of a leading section (12) of the body (10) even when the movable part (16) occupies its outer position.

7. A tool according to any preceding claim, in which the wedge (22) is longer than the movable part (16).

8. A tool according to any preceding claim, in which the wedge (22) extends beyond the leading end of the or the movable part (16) in all positions of the wedge (22).

9. A tool according to any preceding claim, in which said second means comprise a hollow trailing section (20) of the body (10) which accommodates the hydraulic cylinder (24) and over which the leading end of the liner (30) is fitted.

## Patentansprüche

1. Werkzeug zum Aufbrechen von Leitungen, mit einem langgestreckten Körper (10), einer ersten Einrichtung zum Befestigen des Körpers an einer Schleppvorrichtung und einer zweiten Einrichtung, die mit einer Auskleidung kuppelbar ist, wobei der Körper eine nach vorne spitz zulaufende äußere Wand (16, 18) aufweist und einen kraftgetriebenen Mechanismus mit einem zugespitzten Bauteil (22) enthält, der in Längsrichtung des Körpers bewegbar ist, dadurch gekennzeichnet, daß die spitz zulaufende äußere Wand in zwei Teile (16, 18) längsgeteilt ist, daß der erste Teil (16) Führungsteile (62; 48) aufweist, durch welche dieser Teil (16) zur Ausführung einer geradlinigen Bewegung quer zum Körper (10) durch Wirkverbindung mit entsprechenden Teilen (60; 90, 100) am Körper geführt ist, daß dieser Teil (16) geradlinig quer zum Körper durch einen kraftgetriebenen Mechanismus in Form eines Hydraulikzylinders (24) bewegbar ist, der auf einen Keil (22) mit einer Anlagefläche (52) einwirkt, die in stetiger Gleitverbindung mit einer Anlagefläche am beweglichen ersten Teil (16) steht, und mit einer Anlagefläche (54), die in stetiger Gleitverbindung mit einer Anlagefläche (56) am Körper (10) steht, und daß die Führungsteile (62, 48; 60, 90, 110) so angeordnet sind, daß sie Quer und Biegekräfte von dem beweglichen ersten Teil (16) aufgrund der Beaufschlagung durch den Zylinder (24) fernhalten.

2. Werkzeug nach Anspruch 1, dadurch gekennzeichnet, daß sich jeder der Teile (16, 18) in Umfangsrichtung um 180° erstreckt.

3. Werkzeug nach Anspruch 1 oder 2, dadurch gekennzeichnet, daß an benachbarten Längsrändern der Teile (16, 18) der eine Rand (74) von einer entsprechenden Längsranderweiterung (72) des benachbarten Teils überlappt ist.

4. Werkzeug nach einemder vorhergehenden Ansprüche, dadurch gekennzeichnet, daß die Teile (16, 18) sich in Längsrichtung erstreckende und diametral gegenüberliegende äußere Längsrippen (68, 70) tragen.

5. Werkzeug nach Anspruch 4, dadurch gekennzeichnet, daß die Rippe am unbeweglichen Teil (18) sich nach vorne über die Rippe (68) an einem beweglichen Teil hinaus erstreckt.

6. Werkzeug nach Anspruch 4 oder 5, dadurch gekennzeichnet, daß das vordere Ende der Rippe (68) an einem beweglichen Teil (16) nicht über die äußere Oberfläche eines vorderen Abschnitts (12) des Körpers (10) hinausragt, selbst wenn der bewegliche Teil (16) seine äußere Position einnimmt.

7. Werkzeug nach einem der vorangehenden Ansprüche, dadurch gekennzeichnet, daß der Keil (22) länger ist als der bewegliche Teil (16).

8. Werkzeug nach einem der vorangehenden Ansprüche, dadurch gekennzeichnet, daß der Keil (22) sich über das vordere Ende des beweglichen Teils (16) in allen Positionen des Keils (22) hinaus erstreckt.

9. Werkzeug nach einem der vorangehenden Ansprüche, dadurch gekennzeichnet, daß die zweite Einrichtung einen hohlen hinteren Abschnitt (20) des Körpers (10) aufweist, der den Hydraulikzylinder (24) aufnimmt und auf dem das

**0 190 502**

vordere Ende der Auskleidung (30) befestigt wird.

**Revendications**

1. Outil à éclater des canalisations, comprenant un corps allongé (10), des premiers moyens pour attacher le corps à un dispositif de remorquage et des seconds moyens pouvant s'enclencher avec une chemise, le corps comprenant une paroi extérieure (16, 18) conique vers l'avant et contenant un mécanisme motorisé comprenant un élément conique (22) mobile longitudinalement au corps, caractérisé en ce que la paroi extérieure conique est divisée longitudinalement en deux parties (16, 18), la première partie (16) comportant des parties de guidage (62; 48) au moyen desquelles cette partie (16) est guidée pour effectuer un mouvement rectiligne transversalement au corps (10) par entrée en contact avec des parties coopérantes (60; 90, 110) situées sur le corps, ladite partie (16) étant mobile en un mouvement rectiligne transversal au corps par un mécanisme motorisé qui est un cylindre hydraulique (24) agissant sur un coin (22) ayant une surface d'appui (52) en contact permanent de glissement avec une surface d'appui située sur la première partie mobile (16) et ayant une surface d'appui (54) en contact permanent de glissement avec une surface d'appui (56) située sur le corps (10), les parties de guidage (62, 48; 60, 90, 110) étant agencées de façon à empêcher des charges latérales et des charges de flexion, agissant sur la première partie mobile (16), d'être imposées au cylindre (24).

2. Outil selon la revendication 1, dans lequel chacune desdites parties (16, 18) présente une étendue circonférentielle de 180°.

3. Outil selon la revendication 1 ou la revendication 2, dans lequel, à des bords longitudinaux adjacents desdites parties (16, l8), un bord (74) est chevauché par un prolongement marginal longitudinal respectif (72) de la partie adjacente.

4. Outil selon l'une quelconque des revendications précédentes, dans lequel lesdites parties (16, 18) portent des nervures extérieures longitudinales (68, 70), diamétralement opposées et s'étendant longitudinalement.

5. Outil selon la revendication 4, dans lequel la nervure située sur la partie non mobile (18) s'étend vers l'avant au-delà de la nervure (68) située sur une partie mobile.

6. Outil selon la revendication 4 ou la revendication 5, dans lequel l'extrémité avant de la nervure (68) située sur une partie mobile (16) ne dépasse pas au-delà de la surface extérieure d'une section avant (12) du corps (10) même lorsque la partie mobile (16) occupe sa position extérieure.

7. Outil selon l'une quelconque des revendications précédentes, dans lequel le coin (22) est plus long que la partie mobile (16).

8. Outil selon l'une quelconque des revendications précédentes, dans lequel le coin (22) s'étend au-delà de l'extrémité avant de la partie mobile (16) dans toutes les positions du coin (22).

9. Outil selon l'une quelconque des revendications précédentes, dans lequel lesdits seconds moyens comprennent une section arrière creuse (20) du corps (10) qui loge le cylindre hydraulique (24) et sur laquelle est emmanchée l'extrémité avant de la chemise (30).

**FIG.1A.**

FIG.1B.

## FIG.2.

FIG.3.

FIG.4.

0 190 502